# EUROPEAN PATENT SPECIFICATION

(11) **EP 0 977 022 B1**
(45) Date of publication and mention of the grant of the patent: **25.02.2004**
(21) Application number: 99305992.2
(22) Date of filing: 28.07.1999
(51) Int. Cl.: G01H 9/00, G01V 1/16

(54) **Optical waveguide vibration sensor system for remote detection**
Vibrationssensor mit optischem Wellenleiter für Fernmessung
Dispositif capteur de vibration à guide d'ondes optiques pour la détection à distance

(30) Priority: 31.07.1998 US 127442
(43) Date of publication of application: 02.02.2000
(73) Proprietor: LITTON SYSTEMS, INC., Woodland Hills, California 91367-6675 (US)
(72) Inventor: Hall, David B., La Crescenta, California 91214 (US); Frederick, Donald A., Woodland Hills, California 91367 (US); Fersht, Samuel N., Studio City, California 91604 (US)
(74) Representative: Maury, Richard Philip

(56) References cited:
- WO-A-99/38048
- GB-A- 2 157 014
- US-A- 4 390 974
- US-A- 5 497 233

## Description

### BACKGROUND OF THE INVENTION

This invention relates generally to sensors for detecting mechanical vibrations such as sonic waves that propagate through the earth or through structures formed of solid materials. In particular, this invention relates to sensors that include interferometers to detect mechanical vibrations.

Electro-mechanical sensors such as geophones are used to pick up mechanical vibrations in the ground. Other electromechanical sensors such as piezoelectric hydrophones are used to detect underwater acoustic vibrations. The outputs of these sensors are electrical in nature and must be sent back to a remote location for data retrieval. Coaxial cables or twisted pair cables with limited bandwidth and range must be used. Usually, active signal amplification of the sensor output is necessary to obtain a sufficiently large output at the remote location for obtaining any useful data.

U.S. Patent No. 5,497,233 for Optical Waveguide Vibration Sensor and Method, issued July 27, 1994 to Douglas A. Meyer and assigned to Litton Systems. Inc. introduces the concept of driving a waveguide modulator chip with the voltage output of an electromechanical sensor. Meyer discloses a sensor in which the channel waveguide chip is not a part of a larger fiber optic interferometer. It may not be possible to obtain a sufficiently large path length mismatch or transit time delay mismatch within the waveguide chip to implement the concept described by Meyer with present fiber optic architectures.

For a frequency modulated source, the product of the transit time delay mismatch and the maximum periodic frequency excursion of the optical frequency should be of the order of unity. For lithium niobate, a mismatch of one millimeter might be achieved with great difficulty. This corresponds to a transit time delay mismatch of seven picoseconds requiring an excursion in optical frequency of the order of 100 GHz. This maximum frequency excursion must be achieved on a periodic basis in times much less than one millisecond, which is beyond the current state of the art.

### SUMMARY OF THE INVENTION

A vibration sensor structure according to the present invention is defined in Claim 1. It comprises an optical waveguide formed in an integrated optics substrate and an optical interferometer formed to have two optical paths with the optical waveguide being included in a first one of the optical paths. An optical signal source is arranged to provide an optical signal to the optical interferometer such that the optical interferometer produces an interference pattern that indicates the phase difference between optical signals propagating in the two optical paths. A channel waveguide phase modulator is formed on the substrate and arranged to phase modulate optical signals guided by the optical waveguide. Signal input may be from a geophone arranged to produce an electrical signal in response to mechanical vibrations. The geophone is connected to the channel waveguide phase modulator such that the electrical signal modulates the phase of the optical signal guided by the optical waveguide so that the interference pattern indicates the amplitude of the mechanical vibrations. The vibration sensor structure further includes a phase modulator arranged to modulate the phase of the optical signal before the optical signal is input to the optical waveguide.

The interferometer included in the sensor system may be formed in either the Mach-Zehnder or Michelson configurations. The interferometers may be arranged in an array to monitor vibrations at a plurality of locations.

An appreciation of the objectives of the present invention and a more complete understanding of its structure and method of operation may be had by studying the following description of the preferred embodiment and by referring to the accompanying drawings.

### BRIEF DESCRIPTION OF THE DRAWINGS

FIG. 1 illustrates an optical waveguide vibration sensor system according to the present invention;
FIG. 2A illustrates an optical waveguide vibration sensor that includes a Michelson interferometer having a phase modulator in one leg thereof;
FIG. 2B illustrates an optical waveguide vibration sensor that includes a Michelson interferometer with a push-pull phase modulator and optical fibers coupled to a pair of optical waveguides;
FIG. 2C illustrates an optical waveguide vibration sensor that includes a Michelson interferometer with a push-pull phase modulator and an optical fiber coupled to one of two optical waveguides;
FIG. 3 illustrates an optical waveguide vibration sensor system having a frequency division multiplexing (FDM) architecture; and
FIG. 4 illustrates an optical waveguide vibration sensor system having a time division multiplexing (TDM) architecture.

### DESCRIPTION OF THE PREFERRED EMBODIMENT

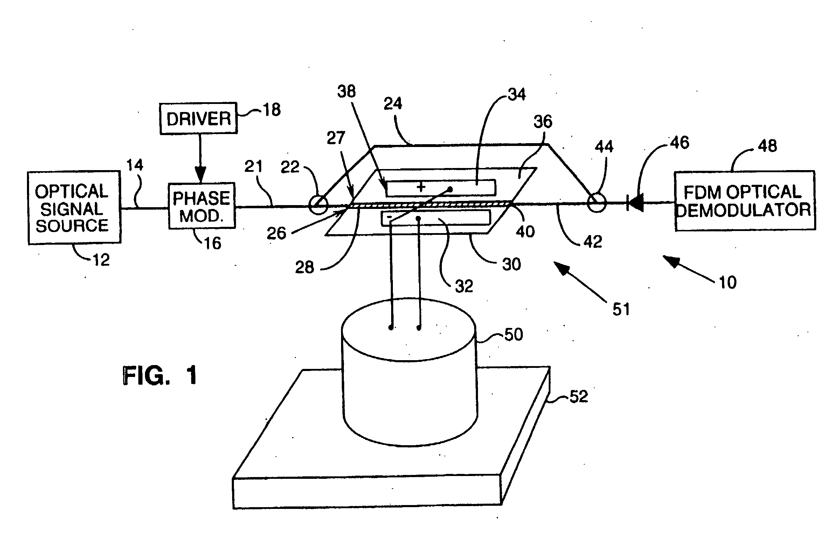

FIG. 1 illustrates the basic principles of a vibration sensor 10 according to the present invention. An optical signal source 12 provides optical signals to an optical fiber 14. The optical signal source typically is a laser. The optical signals pass through a phase modulator 16 to an optical fiber 21. The phase modulator 16 is arranged to receive electrical signals from a driver 18.

Optical signals output from the phase modulator 16 then propagate in the optical fiber 21 propagate to an optical coupler 22. The optical coupler 22 preferably has a coupling ratio of 0.5 so that half of the optical signal intensity remains in the optical fiber 21 while half is coupled into an optical fiber 24.

The optical fiber 21 has an end 26 that is butt-coupled to an end 27 of an optical waveguide 28 that is formed in a substrate 30. The substrate 30 preferably comprises lithium niobate or other material suitable for serving as a substrate for an integrated optics waveguide. A pair of planar electrodes 32 and 34 are formed on the surface 36 of the substrate 30. The electrodes 32 and 34 are arranged to be on opposite sides of the optical waveguide 28. The arrangement of the optical waveguide 28 and the electrodes 32 and 34 forms a phase modulator 38.

The other end 40 of the optical waveguide 28 is butt-coupled to an optical fiber 42. The optical fiber 42 receives optical signals output from the optical waveguide 28 and guides them to a optical coupler 44 which optically couples the optical fibers 24 and 42. Optical signals guided by the fiber 24 and 42 combine in the optical coupler 44 and form an interference pattern. A photodetector 46 is arranged to receive the combined optical signals guided by the optical fiber 42 out of the optical coupler 44. The photodetector 46 produces electrical signals that indicate the optical intensity in the interference pattern. The electrical signals output from the photodetector 46 are then input to a demodulator 48 that processes the electrical signals.

The electrodes 32 and 34 receive electrical signals from a geophone 50. The geophone 50 produces electrical signals that indicate vibration of a platform 52 upon which the geophone 50 is mounted. The phase modulator 38 then acts upon the optical waveguide 28 so that optical signals guided by the optical waveguide 28 experience an optical phase shift proportional to the applied voltage from the geophone 50.

The combination of the optical fibers 21 and 42, the optical couplers 22 and 44 and the optical waveguide 28 is a Mach-Zehnder interferometer 51. The optical fiber 24 forms one leg of the Mach-Zehnder interferometer. Optical waveguide 28, the length of optical fiber 21 between the optical coupler 22 and the optical waveguide 28 and the portion of the optical fiber 42 between the optical waveguide 28 and the optical coupler 44 form the other leg. The interferometer is used to sense the optical phase shift caused by vibration of the mounting platform 52 of the geophone 50.

The relatively short fiber optic portions of the interferometer do not sense the vibrational ground motion. They are used as means for obtaining a sufficient path length mismatch between the two legs for optical signal processing with appropriate frequency modulation of the laser source.

Path length mismatches ranging between a few centimeters and a few meters make the present invention compatible with existing fiber optic sensor architectures. In any case, the total amount of fiber in the interferometer is no more than a few meters and can be packaged in a vibration-isolated protective housing to minimize any unwanted sensing of ground vibrations. There will be slow drifts of the optical path lengths within the fiber legs over time and temperature. For a one degree Celsius change in temperature in one minute there is typically fringe motion corresponding to 0.1 Hz for a one meter pathlength mismatch. At ground vibration frequencies above a minimum of one to five Hz, the fringe motion is entirely due to the channel waveguide modulator chip.

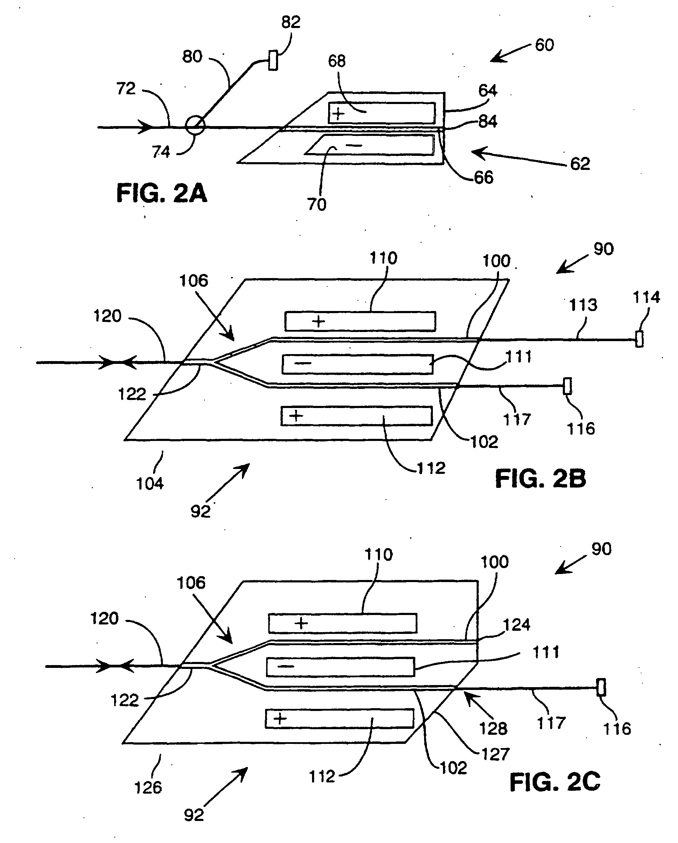

FIGS. 2A-2C show other interferometer structures that may be used instead of the interferometer 51 to form a sensor according to the present invention. For simplicity, no electromechanical sensors are shown; however, the polarities of the applied sensor voltages are shown as plus and minus signs on the electrodes on the phase modulators.

FIG. 2A shows a mismatched Michelson interferometer 60 with a single leg phase modulator 62. A substrate 64 has an optical waveguide 66 formed thereon. A pair of electrodes 68 and 70 are formed on opposite sides of the optical waveguide 66. An optical fiber 72 guides light from an optical signal source to an optical coupler 74. Part of the light incident on the optical coupler 74 remains in the optical fiber 72, which is butt-coupled to the optical waveguide 66. The remainder of the source light incident on the optical coupler 74 is coupled into an optical fiber 80, which terminates in a reflector 82. The optical waveguide 66 terminates in a reflector 84 to complete the Michelson interferometer architecture. The Michelson interferometer has the advantage of making the signal input make two passes through the phase modulator 62. For a given length of the electrodes 68 and 70, the double pass through the phase modulator 62 gives twice the scale factor of radians per volt as compared to the single pass Mach-Zehnder interferometer of FIG. 1.

FIG. 2B illustrates another Michelson interferometer 90 with a push-pull phase modulator 92 encompassing both legs. An optical waveguide configuration is formed to have a pair of parallel optical waveguides 100 and 102 in a substrate 104. One pair of ends of the optical waveguides 100 and 102 are coupled by a Y-junction optical waveguide configuration 106. Three parallel electrodes 110-112 are formed on the surface of the substrate 104. The electrodes 110-112 and optical waveguides 100 and 102 are arranged so that the optical waveguide 100 is between the electrodes 110 and 111, and the optical waveguide 102 is between the electrodes 111 and 112.

One end of an optical fiber 113 is coupled to the end of the optical waveguide 100. The other end of the optical fiber 113 terminates in a reflector 114. One end of an optical fiber 117 is also coupled to the end of the optical waveguide 102. The optical fiber 117 terminates in a reflector 116 to complete the Michelson interferometer 90. The optical fibers 113 and 117 have different lengths to provide the desired mismatch in the optical path lengths in the Michelson interferometer 90.

The positive polarity output of the geophone 50 as shown in FIG. 1 is applied to the electrodes 110 and 112 while the negative polarity output is applied to the electrode 111. Therefore, optical signals guided by the optical waveguides 100 and 102 have opposite phase shifts. The optical waveguides 100 and 102 terminate in reflectors 114 and 116, respectively to complete the Michelson interferometer architecture.

Optical signals are input to the Michelson interferometer 90 via an optical fiber 120 that is butt-coupled to a leg 122 of the Y-junction 106. For a given length of the electrodes 110-112, the double pass push-pull Michelson interferometer configuration gives four times the scale factor of radians per volt as compared to the single pass Mach Zehnder configuration. The unequal length fiber pigtails 113 and 117 provide the needed length mismatch. For most efficient operation, these pigtail optical fibers 113 and 117 are polarization maintaining fibers that are correctly oriented with respect to the channel waveguide 100 and 102. In FIGS. 1, 2A and 2B, the interfaces between optical fibers and optical waveguides are angled to eliminate unwanted back reflections. The reflectors 82, 84, 114 and 116 are arranged for normal incidence to maximize the reflected signals in the Michelson interferometers 60 and 90.

The push-pull Y-junction phase modulator 92 with correctly oriented polarization maintaining fiber pigtails 113 and 117 and reflectors 114 and 116 provide the interferometer 90 with a visibility of 100%. Within all parts of the interferometer 90 there is only one linear state of polarization for the light. No polarization fading can occur at the output of the interferometer 90 as it can for the interferometers 51 and 60 shown in FIGS. 1 and 2A.

The states of polarization originating from the two separate legs of the interferometer 90 maintain the condition of 100% visibility as they travel on a single fiber to the photodiode receiver. Polarization diversity detection is no longer required because polarization fading from the interferometer to the receiver has been eliminated. A single photodiode with no polarization mask is all that is needed for signal detection. The polarization induced phase noise that arises from the polarization diversity detectors is also eliminated.

FIG. 2C illustrates another Michelson interferometer 90 in which the optical waveguide 100 terminates in a reflector 124. The optical waveguides 100 and 102 are formed on a substrate 126 that has an angled edge 127 at the end 128 of the optical waveguide 102. The optical fiber 117 is coupled to the end of the optical waveguide 102 in the same manner as in FIG. 2B.

It should be understood that in FIGS. 1 and 2A-2C all fiber/waveguide interfaces are angled to eliminate unwanted back-reflections. All mirror interfaces are arranged for normal incidence to maximize back-reflection.

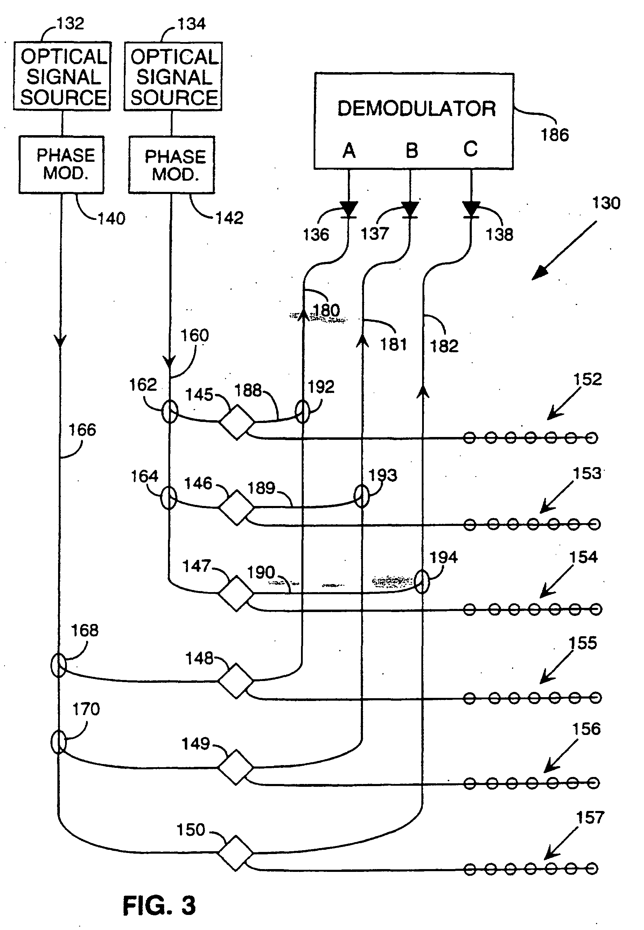

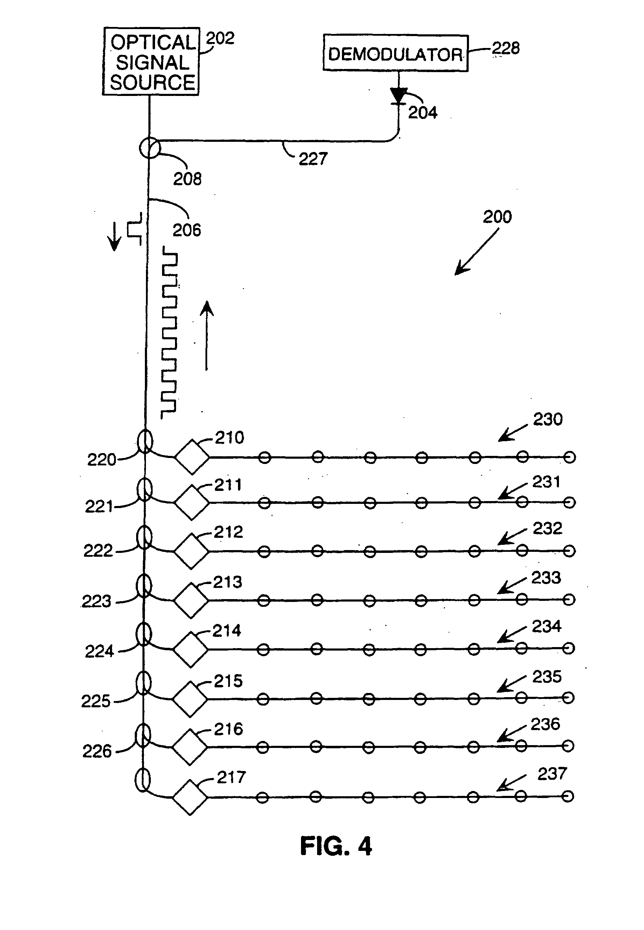

Vibration sensor structures as shown in FIGS. 1, and 2A-2C may be arranged in array architectures as shown in FIGS. 3 and 4, respectively.

FIG. 3 illustrates an FDM architecture 130 that includes a pair of lasers 132 and 134 and three polarization diversity detectors 136-138. The lasers 132 and 134 have corresponding phase modulators 140 and 142. The phase modulators 140 and 142 have phase generated carrier frequencies f₁ and f₂.

The Mach Zehnder interferometer configuration 51 of FIG. 1 is suitable for forming the array structure 130. The array 130 includes a plurality of Mach-Zehnder interferometers 145-150. A plurality of arrays 152-157 are electrically connected to the Mach-Zehnder interferometers 145-150, respectively in the manner illustrated in FIG. 1. The Mach-Zehnder interferometers 145-147 receive optical signals from the laser 134 via an optical fiber 160. Optical couplers 162 and 164 couple the optical signals from the optical fiber 160 to the Mach-Zehnder interferometers 145 and 146. The Mach-Zehnder interferometers 148-150 receive optical signals from the laser 132 via an optical fiber 166. Optical couplers 168 and 170 couple the optical signals from the optical fiber 166 into the Mach-Zehnder interferometers 148 and 149.

The Mach-Zehnder interferometers 148-150 provide output signals to optical fibers 180-182, respectively. The optical fibers 180-182 are in turn arranged to provide optical signals to the detectors 136-138, respectively. The detectors 136-138 are connected to a demodulator 186. The Mach-Zehnder interferometers 145-147 provide output signals to optical fibers 188-190, respectively. Optical couplers 192-194 couple the optical fibers 188-190, respectively, to the optical fiber 180-182, respectively.

Each of the six Mach-Zehnder interferometers 145-150 preferably contains a single phase modulator of the type shown in FIG. 1. Each of the six phase modulators is driven by the localized linear array 152-157, respectively. FIG. 3 shows an embodiment of the invention in which each array 152-157 includes seven electromechanical sensors. The electromechanical sensors total 42 in a 6x7 array. This type of array architecture can be increased in size to more than one hundred optical interferometer locations each with a phase modulator driven by up to a dozen or more electromechanical sensors such as the geophone 50 of FIG. 1.

FIG. 4 shows a TDM array architecture 200 with one pulsed laser source 202 and one detector 204. A single fiber 206 serves as both a down lead and return lead. A linear array of eight Michelson interferometers 210-217 of the type shown in either FIG. 2A or FIG. 2B is coupled to the optical fiber 206. Optical couplers 220-226 optically couple the optical fiber 206 to the Michelson interferometers 210-216. The laser 202 sends down one optical pulse to the interferometers 210-216, and eight pulses return to the detector 204, which then provides electrical signals to a demodulator 228. Each of the interferometers 210-217 includes a phase modulator of the type shown in either FIG. 2A or FIG. 2B driven by corresponding localized linear arrays 230-237 of seven sensors. The sensors may be electromechanical geophone sensors as shown in FIG. 1.

The architecture 200 may be expanded by using a light source that includes erbium doped fiber amplifiers (not shown) and a pump laser (not shown) in addition to the signal laser 202. Such an array architecture can be increased to fifty or more optical interferometer locations for a single signal laser 202.

For geophysical applications, an FDM or TDM system can use a single fiber optic land cable of a length of one to ten kilometers or more that can obtain data from many hundreds of remote geophones with no active electronic components except at the one location for the laser transmitter and the optical receiver with the appropriate signal processing and demodulation functions.

In a TDM embodiment of the invention, the optical signal source 12 as shown in FIG. 1 should launch orthogonal states of polarization sequentially into the optical fiber 14. In an FDM embodiment the optical signal source launches orthogonal states of polarization at different frequencies (FDM) to guarantee no excessive polarization fading at any time.

## Claims

1. A vibration sensor structure including:
an integrated optics substrate (30) having an optical waveguide (28) formed therein;
an optical interferometer (51) formed to have first and second optical paths with the optical waveguide (28) being included in the first optical path, and with a path length mismatch between the first and second optical paths;
an optical light source (12) arranged to provide an optical signal to the optical interferometer (51) such hat the optical interferometer (51) produces an interference pattern that indicates the phase difference between optical signals propagating in the first and second optical paths;
a channel waveguide phase modulator (38) arranged to phase modulate optical signals in the first optical path of the optical interferometer (51) guided in the optical waveguide (28);
an electromechanical sensor (50) arranged to produce an electrical signal in response to mechanical vibrations, the electromechanical sensor (50) being connected to the channel waveguide phase modulator (38) such that the electrical signal modulates the phase of the optical signal guided be the optical waveguide (28) so that the interference pattern indicates the amplitude of the mechanical vibrations;
**characterised in that** a phase modulator (16) is arranged between the light source (12) and the optical interferometer (51) to modulate the phase of the optical signal before the optical signal is input to the optical interferometer (51), and **in that** the second optical path is at least partly formed by an optical fiber (24).

2. The vibration sensor structure of claim 1 **characterised by** a photodetector (46) arranged to receive the combination of the optical signals and by a frequency division modulator (48) arranged to receive electrical signals output from the photodetector (46).

3. The vibration sensor structure of claim 1 or 2 **characterised in that** the electromechanical sensor (50) is a geophone.

4. A motion sensor system, comprising:
an array of motion sensor structures according to any of claims 1 to 3;
an optical signal source (132, 134, 202) arranged to provide optical signals to the array (130, 230) of interferometers (145 to 150, 210 to 217) to provide optical signal inputs thereto;
and an array of electromechanical sensors (152 to 157, 230 to 237) connected to the array (130, 230) of interferometers (145 to 150, 210, to 217) such that each interferometer (145 to 150, 210 to 217) has a corresponding member of the array of electromechanical sensors (152 to 157, 230 to 237) connected thereto.

5. The motion sensor system of claim 4 **characterised in that** the optical signal source comprises:
a plurality of lasers (132, 134);
a plurality of phase modulators (140, 142) arranged to modulate the light output by a corresponding one of the plurality of lasers (132, 134) at a corresponding modulation frequency before the optical signal is input to the optical interferometers (145 to 150); and
a plurality of fiber optic signal input cables (160, 166) connected to the plurality of phase modulators (140, 142) and arranged to guide from each phase modulator (140, 142) to a corresponding group of interferometers (145 to 147, 148 to 150) in the array of interferometers.

## Patentansprüche

1. Vibrationssensor-Aufbau, einschließend:
ein Substrat (30) in integrierter Optik mit einem optischen Wellenleiter (28), der darin gebildet ist;
ein optisches Interferometer (51), welches gebildet ist, um erste und zweite optische Pfade aufzuweisen, mit dem optischen Wellenleiter (28) in dem ersten optischen Pfad eingeschlossen und mit einer Pfadlängen-Fehlübereinstimmung zwischen den ersten und zweiten optischen Pfaden;
eine optische Lichtquelle (12), die angeordnet ist, um ein optisches Signal an dem optischen Interferometer (51) derart bereitzustellen, dass das optische Interferometer (51) ein Interferenzmuster erzeugt, das die Phasendifferenz zwischen optischen Signalen anzeigt, die sich in den ersten und zweiten optischen Pfaden ausbreiten;
einen Kanalwellenleiter-Phasenmodulator (38), der angeordnet ist, um optische Signale in dem ersten optischen Pfad des optischen Interferometers (51), die in dem optischen Wellenleiter (28) geführt werden, in der Phase zu modulieren;
einen elektromechanischen Sensor (50), der angeordnet ist, um ein elektrisches Signal im Ansprechen auf mechanische Vibrationen zu erzeugen, wobei der elektromechanische Sensor (50) mit dem Kanalwellenleiter-Phasenmodulator (38) derart verbunden ist, dass das elektrische Signal die Phase des optischen Signals, das in dem optischen Wellenleiter (28) geführt wird, so moduliert, dass das Interferenzmuster die Amplitude der mechanischen Vibrationen anzeigt;
**dadurch gekennzeichnet, dass** ein Phasenmodulator (16) zwischen der Lichtquelle (12) und dem optischen Interferometer (51) angeordnet ist, um die Phase des optischen Signals zu modulieren, bevor das optische Signal dem optischen Interferometer (51) eingegeben wird, und dass der zweite optische Pfad wenigstens teilweise durch eine optische Faser (24) gebildet wird.

2. Vibrationssensor-Aufbau nach Anspruch 1, **gekennzeichnet durch** einen Photodetektor (46), der angeordnet ist, um die Kombination der optischen Signale zu empfangen, und **durch** einen Frequenzteilungs-Modulator (48) der angeordnet ist, um elektrische Signale zu empfangen, die von dem Photodetektor (46) ausgegeben werden.

3. Vibrationssensor-Aufbau nach Anspruch 1 oder 2 **dadurch gekennzeichnet, dass** der elektromechanische Sensor (50) ein Geophon ist.

4. Bewegungssensor-System, umfassend:
ein Feld von Bewegungssensor-Aufbauten in Übereinstimmung mit irgendwelchen der Ansprüche 1 bis 3;
eine optische Signalquelle (132, 134, 202), die angeordnet ist, um optische Signale an dem Feld (130, 230) von Interferometern (145 bis 150, 210 bis 217) bereitzustellen, um optische Signaleingänge daran bereitzustellen; und
ein Feld von elektromechanischen Sensoren (152 bis 157, 230 bis 237), die mit dem Feld (130, 230) von Interferometern (145 bis 150, 210 bis 217) derart verbunden sind, dass jedes Interferometer (145 bis 150, 210 bis 217) ein entsprechendes Element des Felds von elektromechanischen Sensoren (152 bis 157, 230 bis 237), die damit verbunden sind, aufweist.

5. Bewegungssensor-System nach Anspruch 4, **dadurch gekennzeichnet, dass** die optische Signalquelle umfasst:
eine Vielzahl von Lasern (132, 134);
eine Vielzahl von Phasenmodulatoren (140, 142), die angeordnet sind, um das Licht, das von einem entsprechenden der Vielzahl von Lasern (132, 134) ausgegeben wird, bei einer entsprechenden Modulationsfrequenz zu modulieren, bevor das optische Signal den optischen Interferometer (145 bis 150) eingegeben wird; und
eine Vielzahl von faseroptischen Signaleingabekabeln (160, 166), die mit der Vielzahl von Phasenmodulatoren (140, 142) verbunden und angeordnet sind, um von jedem Phasenmodulator (140, 142) zu einer entsprechenden Gruppe von Interferometern (145 bis 147, 148 bis 150) in dem Feld von Interferometern zu führen.

## Revendications

1. Structure de capteur de vibration incluant:
un substrat optique intégré (30) qui comporte un guide d'ondes optique (28) qui est formé dedans;
un interféromètre optique (51) qui est formé de manière à comporter des premier et second chemins optiques, le guide d'ondes optique (28) étant inclus dans le premier chemin optique, et une désadaptation de longueur de chemin existant entre les premier et second chemins optiques;
une source de lumière optique (12) qui est agencée pour appliquer un signal optique sur l'interféromètre optique (51) de telle sorte que l'interféromètre optique (51) produise un motif d'interférence qui représente la différence de phase entre des signaux optiques qui se propagent dans les premier et second chemins optiques;
un modulateur de phase de guide d'ondes de canal (38) qui est agencé pour moduler en phase des signaux optiques dans le premier chemin optique de l'interféromètre optique (51) qui sont guidés dans le guide d'ondes optique (28);
un capteur électromécanique (50) qui est agencé de manière à produire un signal électrique en réponse à des vibrations mécaniques, le capteur électromécanique (50) étant connecté au modulateur de phase de guide d'ondes de canal (38) de telle sorte que le signal électrique module la phase du signal optique qui est guidé par le guide d'ondes optique (28) de telle sorte que le motif d'interférence représente l'amplitude des vibrations mécaniques,
**caractérisée en ce qu'**un modulateur de phase (16) est agencé entre la source de lumière (12) et l'interféromètre optique (51) de manière à moduler la phase du signal optique avant que le signal optique ne soit entré sur l'interféromètre optique (51) et **en ce que** le second chemin optique est au moins partiellement formé par une fibre optique (24).

2. Structure de capteur de vibration selon la revendication 1, **caractérisée par** un photodétecteur (46) qui est agencé pour recevoir la combinaison des signaux optiques et par un modulateur de division de fréquence (48) qui est agencé pour recevoir des signaux électriques qui sont émis en sortie depuis le photodétecteur (46).

3. Structure de capteur de vibration selon la revendication 1 ou 2, **caractérisée en ce que** le capteur électromécanique (50) est un géophone.

4. Système de capteurs de déplacement comprenant:
un réseau de structures de capteur de déplacement selon l'une quelconque des revendications 1 à 3;
une source de signal optique (132, 134, 202) qui est agencée pour appliquer des signaux optiques sur le réseau (130, 230) d'interféromètres (145 à 150, 210 à 217) afin d'appliquer des entrées de signal optique dessus; et
un réseau de capteurs électromécaniques (152 à 157, 230 à 237) qui est connecté au réseau (130, 230) d'interféromètres (145 à 150, 210 à 217) de telle sorte que chaque interféromètre (145 à 150, 210 à 217) dispose d'un élément correspondant du réseau de capteurs électromécaniques (152 à 157, 230 à 237) qui lui est connecté.

5. Système de capteurs de déplacement selon la revendication 4, **caractérisé en ce que** la source de signal optique comprend:
une pluralité de lasers (132, 134);
une pluralité de modulateurs de phase (140, 142) qui sont agencés pour moduler la lumière qui est émise en sortie par l'un correspondant de la pluralité de lasers (132, 134) à une fréquence de modulation correspondante avant que le signal optique ne soit entré sur les interféromètres optiques (145 à 150); et
une pluralité de câbles d'entrée de signal à fibre optique (160, 166) qui sont connectés à la pluralité de modulateurs de phase (140, 142) et qui sont agencés pour réaliser un guidage depuis chaque modulateur de phase (140, 142) jusqu'à un groupe correspondant d'interféromètres (145 à 147, 148 à 150) dans le réseau d'interféromètres.
